Europäisches Patentamt

European Patent Office

Office européen des brevets

(19)

(11) Veröffentlichungsnummer: **0 299 283**

**A1**

## EUROPÄISCHE PATENTANMELDUNG

(21) Anmeldenummer: 88110426.9

(22) Anmeldetag: 30.06.88

(51) Int. Cl.⁴: **G01N 21/31 , G01N 21/72**

(30) Priorität: **11.07.87 DE 3723032**

(43) Veröffentlichungstag der Anmeldung:
**18.01.89 Patentblatt 89/03**

(84) Benannte Vertragsstaaten:
**CH DE FR GB IT LI NL**

(71) Anmelder: **Bodenseewerk Perkin-Elmer & Co.
GmbH
Alte Nussdorfer Strasse 15 Postfach 1120
D-7770 Überlingen/Bodensee(DE)**

(72) Erfinder: **Huber, Bernhard
Hildegardring 42
D-7770 Überlingen(DE)**
Erfinder: **Dencks, Carl Günther
Prielstrasse 3
D-7776 Owingen(DE)**
Erfinder: **Tamm, Rolf
Am Fohrenbühl 8
D-7777 Salem 2(DE)**
Erfinder: **Tomoff, Toma
Lawendelweg 9
D-7770 Überlingen(DE)**

(74) Vertreter: **Wolgast, Rudolf, Dipl.-Chem. Dr. et
al
Dipl.-Phys. Jürgen Weisse Dipl.Chem. Dr.
Rudolf Wolgast Bökenbusch 41 Postfach 11
03 86
D-5620 Velbert 11 Langenberg(DE)**

(54) **Atomabsorptions-Spektrometer.**

(57) Bei einem Atomabsorptions- Spektrometer ist
der Brenner (16) durch je einen Schrittmotor (30,38)
horizontal quer zum Meßlichtbündel (12) und vertikal
verstellbar. Die Schrittmotore (30,38) werden von
einem Optimierungsrechner (24) so angesteuert, daß
ein Meßparameter wie z.B. das gemessene Absorptionsvermögen der Atomwolke für das Meßlichtbündel (12), optimal wird.

Fig. 1

## Atomabsorptions- Spektrometer

**Technisches Gebiet**

Die Erfindung betrifft ein Atomabsorptions-
Spektrometer nach dem Oberbegriff des Patentanspruchs 1.

Ein Atomabsorptions- Spektrometer enthält
eine Lichtquelle, welche ein Linienspektrum mit
den Resonanzlinien eines gesuchten Elements
emittiert. Ein optisches System erzeugt ein von der
Lichtquelle ausgehendes Meßlichtbündel. Dieses
Meßlichtbündel fällt auf einen Detektor. Im Strahlengang des Meßlichtbündels wird durch Atomisierungsmittel eine "Atomwolke" erzeugt, in welcher
die Atome einer untersuchten Probe in atomarer
Form vorliegen. Die Atome des gesuchten Elements absorbieren das Meßlichtbündel, während
das Meßlichtbündel von den Atomen anderer Elemente im wesentlichen unbeeinflußt bleibt. Das
Meßlichtbündel erfährt daher eine Schwächung, die
von der Menge des gesuchten Elements in der
Atomwolke und damit in der Probe abhängt. Die
Atomabsorptions- Spektroskopie ist ein sehr empfindliches und sehr genaues Verfahren zur Bestimmung von Konzentrationen eines gesuchten Elements in einer Probe.

**Zugrundeliegender Stand der Technik**

In Aufsätzen von Willis "Atomization problems
in atomic absorption spectroscopy" II und III in
"Spectrochimica Acta" Bd. 25 B (1970), Seiten
487-512 bzw. Bd. 26 B (1971), Seiten 177-189 ist
eine Brenneranordnung beschrieben, bei welcher
der Brenner auf einer vertikalen Verstelleinrichtung
sitzt, die ihrerseits auf einer quer zum Meßlichtbündel verstellbaren Plattform angeordnet ist. Auf
diese Weise können sowohl vertikale als auch horizontale Absorptionsprofile erhalten werden.

Durch die DE-OS 35 28 300 ist ein
Atomabsorptions- Spektrometer mit einer linienemittierenden Lichtquelle, einem auf Licht der Lichtquelle ansprechenden Detektor und einem optischen System zur Erzeugung eines von der Lichtquelle ausgehenden, auf den Detektor fallenden
Meßlichtbündels bekannt. Zur Atomisierung einer
Probe und Erzeugung einer Atomwolke dient ein
Brenner, in dessen Flamme die Atomwolke gebildet wird. Das Meßlichtbündel durchsetzt bei der
eigentlichen Atomabsorptionsmessung die Flamme
des Brenners.

Bei der Anordnung nach der DE-OS 35 28 300
kann der Brenner durch einen Stellmotor zwischen
einer ersten und einer zweiten Stellung hin- und herbewegt werden. In der ersten Stellung wird die
Atomwolke durch den Brenner im Bereich des stationär verlaufenden Meßlichtbündels gebildet. In
der zweiten Stellung ist der Brenner mit seiner
Flamme außerhalb des Bereiches des Meßlichtbündels angeordnet. Dadurch erfolgt eine von atomisierter Probe unbeeinflußte Messung. Es kann
durch diese zweite Messung die Nullinie bestimmt
werden, d.h. diejenige Intensität des Meßlichtbündels, die bei Abwesenheit des gesuchten Elements
in der Probe gemessen wird. Diese Nullinie kann
sich durch Ände rungen der Lampenhelligkeit oder
der Detektorempfindlichkeit ergeben. Solche Änderungen würden unmittelbar in die Messung eingehen.

Bei der DE-OS 35 28 300 ist der Brenner
justierbar auf einem Schlitten angeordnet. Der
Schlitten ist durch einen Stellmotor in einem Gehäuse zwischen der ersten und der zweiten Stellung beweglich. Der Stellmotor ist von einer Motorsteuerung gesteuert. Zum Probenwechsel wird der
Brenner in die zweite Stellung aus dem Meßlichtbündel herausgefahren. Nach Stabilisierung der
Flamme wird der Brenner wieder in die erste Stellung zurückgefahren. Eine Signalverarbeitungsschaltung nimmt eine Driftkompensation vor, wenn
der Brenner in der zweiten Stellung ist. Wenn der
Brenner sich in der ersten Stellung befindet, wird
eine Atomabsorptionsmessung ohne Unterbrechung des Meßlichtbündels über die gesamte Meßzeit hinweg durchgeführt.

Bei dieser bekannten Anordnung ist also das
Problem die Bestimmung und Kompensation der
Nullinie. Der Brenner ist durch einen einzigen Stellmotor in waagerechter Richtung quer zum Meßlichtbündel zwischen zwei festen diskreten Stellungen beweglich. Eine Justage des Brenners gegenüber dem Schlitten erfolgt manuell.

Durch die GB-OS 2 113 831 ist ein Analysenverfahren unter Verwendung eines
Atomabsorptions- Spektrometers bekannt, bei welchem die Atomisierung mittels einer Flamme erfolgt und eine Optimierung durch Variation von
Parametern erfolgt. Zu diesem Zweck werden die
Parameter des Atomabsorptions- Spektrometers
zunächst auf einen Satz von vorgegebenen
Spektrometer- Parametern eingestellt, die von der
gesuchten Substanz abhängen. Dann wird die Strömungsrate der Gasströmung zum Brenner auf einen vorgegebenen Wert eingestellt, der ebenfalls
von der gesuchten Substanz abhängt. Es wird dann
ein Optimierungs- Standard in die Flamme angesaugt und das Absorptionsvermögen des
Optimierungs- Standards gemessen. Das Meßergebnis wird gespeichert. Daraufhin wird die Stömungsrate des Gases in inkrementalen Schritten verändert. Nach jedem dieser Schritte wird wieder Optimierungs- Standard angesaugt und das Absorptionsvermögen gemessen. Der neue Wert für das Absorptionsvermögen wird mit dem gespeicherten Wert verglichen und erneut gespeichert. Das wird fortgesetzt, bis ein maximales Absorptionsvermögen gefunden worden ist. Je nach dem Wert dieses so für den Optimierungs- Standard gefundenen Absorptionsvermögens wird einer von mehreren vorgegebenen Sätzen von Parametern für das Atomabsorptions- Spektrometer eingestellt. Mit der gefundenen Strömungsrate des Gases und dem besagten Satz von Parametern erfolgt anschließend die Ansaugung und Messung einer zu analysierenden Probe. Dieses Verfahren wird durch ein Atomabsorptions- Spektrometer durchgeführt, das von einem Mikrocomputer gesteuert ist.

Bei diesem bekannten Verfahren und Atomabsorptions - Spektrometer wird also die Strömungsrate des dem Brenner zugeführten Gases optimiert. Die Lage des Brenners bleibt dabei unverändert.

Die EP-OS 0 195 488 beschreibt ein Atomabsorptions- Spektrometer, bei welchem eine Probe durch eine Flamme atomisiert wird und bei welchem die Probe durch eine Spritze eingeleitet wird. Der Kolben der Spritze wird durch einen Schrittmotor vorbewegt. Mittels einer Steuerschaltung wird die Strömungsrate der zugeführten Probe durch Steuerung der Geschwindigkeit des Kolbens automatisch so gesteuert, daß die aus dem Meßwert berechnete Absorption innerhalb des empfindlichsten Bereiches des Gerätes liegt.

Es wird hier die Stömungsrate der Probe optimiert. Wenn diese Strömungsrate zu klein ist, wird die auftretende Schwächung des Meßlichtbündels zu gering. Ist die Strömungsrate zu groß, so wird die Konzentration der gesuchten Substanz in der Flamme zu groß und es erfolgt eine Sättigung, nämlich eine praktisch vollständige Absorption der Resonanzwellenlänge der gesuchten Substanz in der Flamme. Dazwischen liegt ein Optimum, das mittels eines Rechnerprogrammes gefunden wird.

Die EP-A2-0 084 392 beschreibt ein Atomabsorptions -Spektrometer, bei welchem in ähnlicher Weise in Abhängigkeit von dem Ausgangssignal des Detektors die Wellenlänge des Monochromators und der Verstärkungsgrad geregelt wird, um ein ein optimales Signal für die weitere Signalverarbeitung zu erhalten.

## Offenbarung der Erfindung

Der Erfindung liegt die Aufgabe zugrunde, eine Brenneranordnung bei einem Atomabsorptions-Spektrometer zu schaffen, welche eine automatische Optimierung der Lage des Brenners relativ zu dem Meßlichtbündel gestattet.

Erfindungsgemäß wird diese Aufgabe durch die im Kennzeichen des Patentanspruchs 1 aufgeführten Maßnahmen gelöst.

Der Atomisierungsgrad der Probe ist in verschiedenen Bereichen der Flamme unterschiedlich. Das hängt von mehreren Parametern ab, u.a. von den Einstellbedingungen für den Zerstäuber, dem verwendeten Brennerkopf und von der Art des Brenngases. Diese beeinflussen den Grad der Zerstäubung der Probe, die Strömungsgeschwindigkeit und die Temperaturverteilung in der Flamme. Die Verteilung des Atomisierungsgrades über die verschiedenen Bereiche der Flamme ist auch abhängig von der Art der gesuchten Substanz. Schließlich hängt die Empfindlichkeit auch nichtlinear von der Konzentration der Atome der gesuchten Substanz ab. Es ergibt sich also für jeden Satz der vorgenannten Parameter eine optimale relative Lage von Flamme und Meßlichtbündel, bei welcher das Meßlichtbündel gerade durch den Teil der Flamme läuft, welcher - je nach Bedarf - ein optimales Signal- zu- Rausch- Verhältnis oder maximale Empfindlichkeit gewährleistet. Jede Veränderung eines der genannten Parameter verlangt eine Überprüfung und ggf. Korrektur der Lage des Brenners.

Die Brenneranordnung nach der Erfindung gestattet eine Verstellung des Brenners mit zwei Freiheitsgraden mittels zweier Stellmotore. Diese Stellmotore können nach einem Optimierungsprogramm von einer Steuereinheit so eingestellt werden, daß der Brenner stets automatisch in einer optimalen Position zu dem Meßlichtbündel steht.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

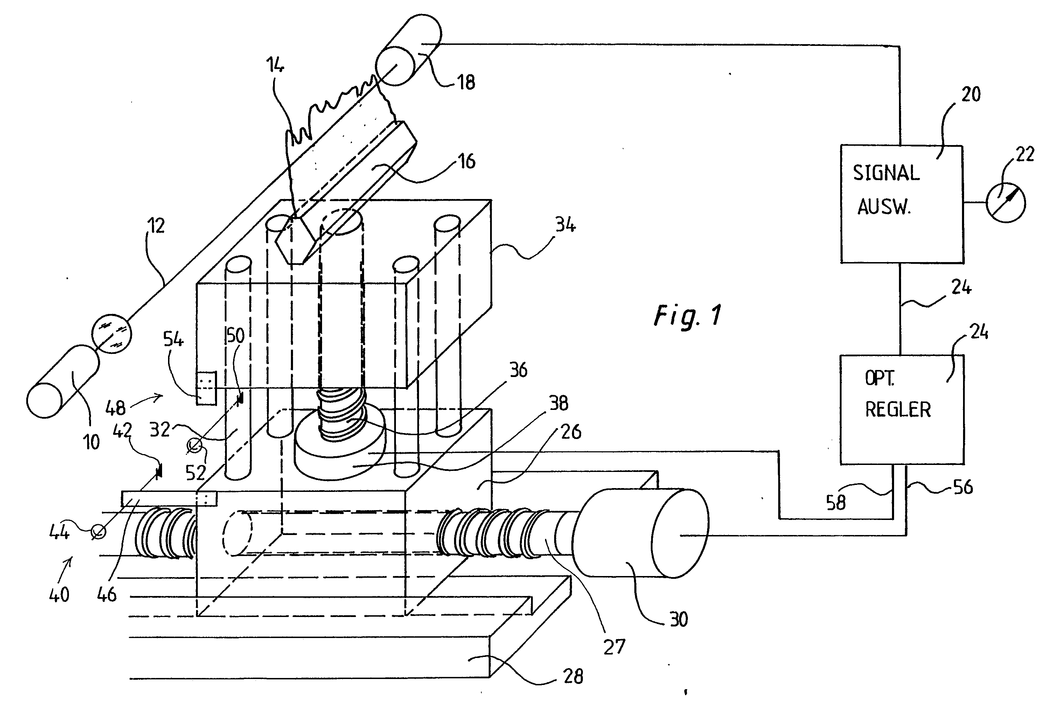

Fig.1 zeigt in schematisch- perspektivischer Darstellung einen relativ zu einem Meßlichtbündel in zwei Freiheitsgraden verstellbaren Brenner eines Atomabsorptions- Spektrometers sowie als Blockschaltbild die Signalverarbeitung und Steuerung.

Fig.2 ist ein Flußdiagramm und zeigt ein Beispiel eines Programms zur Optimierung der Brennerposition.

## Bevorzugte Ausführung der Erfindung

In der Figur ist mit 10 eine Lichtquelle, vorzugweise eine Hohlkathodenlampe, bezeichnet, die ein Meßlichtbündel 12 aussendet. Die Lichtquelle erzeigt ein Linienspektrum, das den Resonanzlinien einer in einer Probe gesuchten Substanz entspricht. Das Meßlichtbündel 12 tritt durch eine Flamme 14, die auf einem Brenner 16 brennt, und einen (nicht dargestellten) Monochromator. Dann fällt das Meßlichtbündel 12 auf einen photoelektrischen Empfänger 18, vorzugsweise einen Photomultiplier. Das Signal des photoelektrischen Empfängers 18 ist auf eine Signalauswertungs-Schaltung 20 geschaltet.

Der Brenner 16 enthält in bekannter und daher nicht näher dargestellter Weise einen Zerstäuber, über welche eine Probenflüssigkeit fein zerstäubt in den Brenngas- und Oxidansstrom des Brenners 16 eingesprüht wird. Diese eingesprühte Probenflüssigkeit wird in der Flamme atomisiert und bildet eine "Atomwolke" in welcher die Bestandteile der Probe überwiegend in atomarer Form vorliegen. Das Meßlichtbündel 12 erfährt dadurch bei seinem Durchtritt durch die Flamme eine Schwächung, die von der Konzentration des gesuchten Elements in der eingesprühten Probe abhängt. Aus dieser Schwächung kann durch geeignete Eichung ein Meßwert für die Konzentration des gesuchten Elements gewonnen werden. Das geschieht mittels der Signalauswertungs- Schaltung. Die ermittelte Konzentration wird angezeigt, was in der Figur schematisch durch ein Anzeigeinstrument 22 angedeutet ist. Die Signalauswertungs- Schaltung 20 liefert an einem Ausgang 24 einen Meßwert für eine zu optimierende Größe, beispielsweise das Absorptionsvermögen der Flamme für die Wellenlängen des Meßlichtbündels 12. Dieses Signal ist auf einen Optimierungsregler 26 geschaltet.

Ein Schlitten 26 ist in einer Führung 28 relativ zu einer Basis des Atomabsorptions- Spektrometers in waagerechter Richtung quer zur Richtung des Meßlichtbündels 12 verschiebbar geführt. Der Schlitten 26 kann mittels einer Stellspindel 28 verstellt werden. Die Stellspindel 28 ist von einem Stellmotor 30 antreibbar. Der Stellmotor 30 ist ein Schrittmotor. An dem Schlitten 26 ist eine vertikale Führung 32 für einen Brennerträger 34 angebracht. Der Brennerträger ist so relativ zu dem Schlitten vertikal beweglich. Der Brennerträger 34 kann durch eine Stellspindel 36 verstellt werden. Die Stellspindel 36 ist von einem zweiten Stellmotor 38 antreibbar. Der zweite Stellmotor 38 sitzt auf dem Schlitten 26. Der zweite Stellmotor ist ebenfalls ein Schrittmotor.

An der Basis des Atomabsorptions- Spektrometers ist ein erster Fühler 40 angebracht, der auf die Stellung des Schlittens 26 anspricht. Dieser erste Fühler 40 ist von einer Lichtschranke gebildet. Die Lichtschranke besteht aus einer Photodiode 42 und und einem photoelektrischen Empfänger 44. In diese Lichtschranke taucht bei einer bestimmten, genau definierten Stellung des Schlittens 26 eine an dem Schlitten angebrachte Fahne 46 ein. Durch den ersten Fühler 40 ist auf diese Weise eine definierte Referenzposition für den ersten Stellmotor 30 festgelegt. Von dieser Referenzposition aus können die Schritte des als Schrittmotor ausgebildeten Stellmotors 30 gezählt werden, so daß die Position des Stellmotors 30 stets genau definiert ist.

An dem Schlitten 34 ist ein zweiter Fühler 48 angebracht, der auf die Stellung des Brennerträgers 34 anspricht. Dieser zweite Fühler 48 ist ebenfalls von einer Lichtschranke gebildet.Die Lichtschranke besteht aus einer Photodiode 50 und einem photoelektrischen Empfänger 52. In diese Lichtschranke taucht bei einer bestimmten, genau definierten Stellung des Brennerträgers 34 eine an dem Brennerträger 34 angebrachte Fahne 54 ein. Durch den zweiten Fühler 48 ist auf diese Weise eine definierte Referenzposition für den zweiten Stellmotor 38 festgelegt. Von dieser Referenzposition aus können die Schritte des als Schrittmotor ausgebildeten Stellmotors 38 gezählt werden, so daß auch die Position des Stellmotors 38 stets genau definiert ist.

Der Stellmotor 30 ist von dem Optimierungsregler 24 über einen Ausgang 56 des Optimierungsreglers 24 gesteuert. Der Stellmotor 38 ist von dem Optimierungsregler 24 über einen Ausgang 58 des Optimierungsreglers gesteuert.

Die Wirkungsweise der beschriebenen Anordnung ist folgende:

Der Stellmotor 30 dient einmal dazu, den Brenner 16 abwechselnd für die Atomabsorptionsmessung in eine Betriebsstellung zu fahren, in welcher das Meßlichtbündel durch die Flamme 14 hindurchgeht, oder in eine Stellung, in welcher sich die Flamme vollständig außerhalb des Meßlichtbündels befindet. Diese zweite Stellung dient zur Bestimmung und Kompensation einer Nullinie. Diese Funktion der abwechselnden Messung mit und ohne Flamme entspricht der oben schon erwähnten DE-OS 35 28 300. Es brauchen hier aber keine Anschläge vorgesehen zu werden. Vielmehr wird der Brenner 16 dadurch um eine definierte Strecke aus dem Meßlichtbündel heraus und wieder zurück verfahren, daß auf den Stellmotor 30 eine definierte Anzahl von Impulsen gegeben wird.

Aus der Nullinie und der gemessenen Schwächung des Meßlichtbündels durch die Absorption in der Flamme wird mittels der Signalauswertungs-Schaltung 20 das Absorptionsvermögen der in der Flamme im Bereich des Meßlichtbündels gebildeten Atomwolke bestimmt und unter Berücksichtigung der Eichung die Konzentration der gesuchten Substanz in der Probe. Diese Konzentration wird an dem Anzeigeinstrument 22 ausgegeben. Das ist bekannte Technik und daher hier nicht im einzelnen beschrieben.

Das Absorptionsvermögen wird auf den Optimierungsrechner 24 aufgeschaltet. Der Optimierungsrechner 24 sucht für beide Stellmotoren eine Stellung, in welcher das gemessene Absorptionsvermögen einen Maximalwert annimmt. Das geschieht auf ähnliche Weise, wie das oben im Zusammenhang mit der GB-OS 2 113 831 für die Strömungsrate der Gasströmung zum Brenner beschrieben wurde. Es wird die Position des Brenners 16 in vertikaler oder horizontaler Richtung jeweils um einen Schritt verändert und kontrolliert, ob das gemessene Absorptionsvermögen steigt oder fällt. Davon abhängig erfolgen die nächsten Schritte, bis ein Maximalwert ermittelt wurde, bei welchem eine Lageänderung um jeweils einen Schritt in vertikaler oder horizontaler Richtung praktisch keine Änderung des gemessenen Absorptionsvermögens ergibt.

Statt des Absorptionsvermögens können auch andere Meßparameter in gleicher Weise optimiert werden, beispielsweise wie oben schon erwähnt, das Signal-zu-Rausch-Verhältnis.

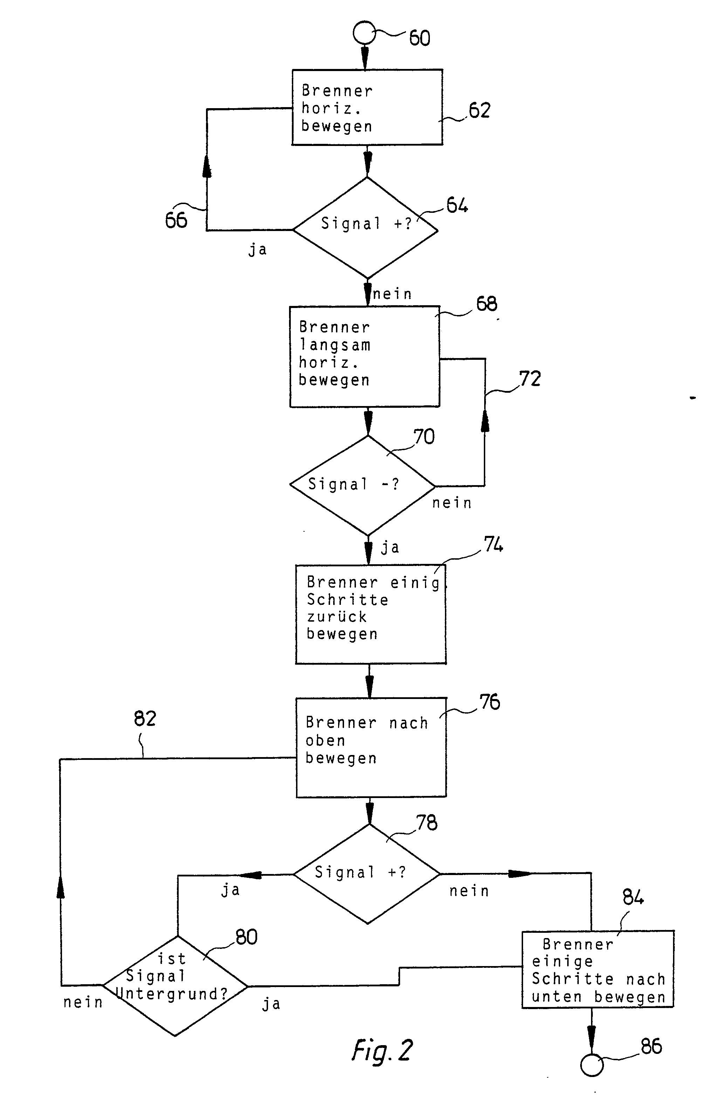

In Fig.2 ist ein Flußdiagramm für die Optimierung der Brennerposition dargestellt.

Mit 60 ist der Start des Optimierungsprogrammes bezeichnet. Der Brenner wird zunächst durch den Stellmotor 30 mit relativ großer Geschwindigkeit in horizontaler Richtung bewegt. Das ist durch das Rechteck 62 symbolisiert. Es wird geprüft, ob das Signal dabei ansteigt oder nicht. Diese Prüfung ist durch den Rhombus 64 dargestellt. Ist das Ergebnis dieser Prüfung positiv ("ja"), läuft die Schleife 66 zurück zu dem Rechteck 62. Der Brenner wird dadurch solange schrittweise in horizontaler Richtung weiterbewegt, wie sich bei dieser Bewegung ein Anstieg des Signals ergibt. Wenn kein Signalanstieg mehr stattfindet ("nein"), wird auf eine langsamere Horizontalbewegung mit kleineren Schritten umgeschaltet. Das ist durch das Rechteck 68 dargestellt. Es erfolgt jetzt eine Prüfung, ob das Signal bei der weiteren Horizontalbewegung abnimmt, die Signaländerung also negativ wird. Diese Prüfung ist wieder durch einen Rhombus 70 dargestellt. Ist das Ergebnis dieser Prüfung negativ ("nein"), läuft die Schleife 72 zurück zu dem Rechteck 68. Die langsame Horizontalbewegung wird also fortgesetzt. Ist das Ergebnis der Prüfung positiv ("ja"), findet also bei der weiteren Horizontalbewegung ein Signalabfall statt, wird der Brenner einige Schritte zurückbewegt. Das ist durch das Rechteck 74 dargestellt. Der Brenner befindet sich dann in einer optimalen Horizontalposition. Anschließend wird der Brenner durch den zweiten Stellmotor 38 schrittweise nach oben bewegt. Das ist durch das Rechteck 76 dargestellt. Dabei erfolgt nach jedem Schritt eine Prüfung, ob sich das Signal vergrößert hat oder nicht. Das ist durch einen Rhombus 78 dargestellt. Ist das Ergebnis dieser Prüfung positiv ("ja"), erfolgt eine weitere Prüfung, welche durch einen Rhombus 80 dargestellt ist. Dabei wird geprüft, ob das Signal etwa durch "Untergrund" hervorgerufen ist, nämlich dadurch, daß der Brenner in den Strahlengang hineingefahren wird. Wenn der Brenner in den Strahlengang hineinragt, wird eine Absorption vorgetäuscht. Es ergibt sich also ein Absorptions - Signal. Beim nächsten vertikalen Schritt des Brenners, ragt dieser noch weiter in den Strahlengang hinein. Das vorgetäuschte Absorptionssignal steigt an, was ein weiteres Anheben des Brenners einleiten würde. Das wird durch die Prüfung gemäß Rhombus 80 vermieden.

Die Prüfung kann dadurch erfolgen, daß eine Messung des Untergrundes durchgeführt wird, beispielsweise indem durch Anlegen eines magnetischen Feldes an Lichtquelle 10 oder Flamme 14 eine Relativverschiebung zwischen den von der Lichtquelle 10 emittierten Spektrallinien und den von der gesuchten Substanz in der Probe absorbierten Spektrallinien hervorgerufen wird. Es kann auch die Probenzufuhr zur Bestimmung der Untergrundabsorption abgeschaltet werden. Es läßt sich dadurch unterscheiden, ob der Signalanstieg ein Anstieg des Absorptionssignals von der Probe oder nur ein Anstieg des Untergrundes ist. Im ersteren Falle ("nein") wird die Schleife 82 zu dem Rechteck 76 zurückgeführt. Das bedeutet, daß der Brenner 16 durch den zweiten Stellmotor 38 weiter nach oben verstellt wird. Im letzteren Falle ("ja") wird der Brenner 16 um einige Schritte nach unten bewegt, was durch ein Rechteck 84 dargestellt ist, und der Einstellvorgang beendet. Das Programmende ist durch einen Kreis 86 dargestellt.

Wenn das Ergebnis der Prüfung gemäß Rhombus 76 negativ ist ("nein"), das Signal also nicht mehr zunimmt, dann führt das Flußdiagramm ebenfalls zu dem Rechteck 84: Der Brenner 16 wird einige Schritte nach unten bewegt und der Einstellvorgang beendet.

## Ansprüche

1. Atomabsorptions- Spektrometer, enthaltend

(a) eine linienemittierende Lichtquelle (10).

(b) einen auf das Licht der Lichtquelle (10) ansprechenden Detektor (18),

(c) ein optisches System zur Erzeugung eines von der Lichtquelle (10) ausgehenden, auf den Detektor (18) fallenden Meßlichtbündels (12),

(d) einen Brenner (16) zur Atomisierung einer Probe und Erzeugung einer Atomwolke in der Flamme (14) des Brenners (16)

(e) erste Mittel (30) zum Verstellen des Brenners (16) in waagerechter Richtung quer zur Richtung des Meßlichtbündels (12) und

(f) zweite Mittel (38), durch welche der Brenner (16) in vertikaler Richtung verstellbar ist,

**dadurch gekennzeichnet, daß**

(g) die ersten Mittel zum Verstellen des Brenners (16) einen ersten Stellmotor (30) zur wenigstens annähernd stufenlosen Verstellung des Brenners (16) in horizontaler Richtung enthalten,

(h) die zweiten Mittel zur Verstellung des Brenners (16) einen zweiten Stellmotor (38) zur wenigstens annähernde stufenlosen Verstellung des Brenners (16) in vertikaler Richtung enthalten und

(i) die Stellmotoren (30,36) von einem Ausgangssignal des Atomabsorptions- Spektrometers im Sinne einer automatischen Optimierung eines Meßparameters steuerbar sind.

2. Atomabsorptions- Spektrometer nach Anspruch 1, **dadurch gekennzeichnet, daß**

(a) in dem Atomabsorptions- Spektrometer ein Schlitten (26) in waagerechter Richtung quer zur Richtung des Meßlichtbündels (12) verschiebbar geführt ist,

(b) der Schlitten (26) von dem ersten Stellmotor (30) verstellbar ist,

(c) auf dem Schlitten (26) ein Brennerträger (34) vertikal beweglich geführt ist,

(d) der Brennerträger (34) durch den zweiten Stellmotor (38) verstellbar ist und

(e) der Brenner (16) auf dem Brennerträger (34) angeordnet ist.

3. Atomabsorptions- Spektrometer nach Anspruch 2, **dadurch gekennzeichnet, daß** der erste und der zweite Stellmotor (30,38) von Schrittmotoren gebildet sind.

4. Atomabsorptions- Spektrometer nach Anspruch 3, **dadurch gekennzeichnet, daß**

(a) an einer Basis des Atomabsorptions- Spektrometers ein erster Fühler (40) angebracht ist, der auf die Stellung des Schlittens (26) anspricht und durch welchen eine definierte Referenzposition für den ersten Stellmotor (30) festgelegt, ist und

(b) an dem Schlitten (26) ein zweiter Fühler (48) angebracht ist, der auf die Stellung des Brennerträgers (34) anspricht und durch welchen eine definierte Referenzposition für den zweiten Stellmotor (38) festgelegt ist.

5. Atomabsorptions- Spektrometer nach Anspruch 4. **dadurch gekennzeichnet, daß** die Fühler (40,48) von je einer Lichtschranke (42,44;50,52) gebildet sind, die mit einer an dem überwachten Teil (26;34) angebrachten Fahne (46;54) zusammenwirkt.

*Fig. 1*

SIGNAL AUSW.

OPT. REGLER

EP 0 299 283 A1

*Fig. 2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| Y,D | DE-A-3 528 300 (BOCKENSEEWERK PERKIN-ELMER & CO. GMBH) * Ansprüche 1-4; Spalte 5, Zeilen 16-30 * | 1 | G 01 N 21/31 G 01 N 21/72 |
| A | | 2 | |
| | --- | | |
| Y | PATENT ABSTRACTS OF JAPAN Band 9, Nr. 93 (P-351)(1816), 23. April 1985; & JP - A - 59 220 631 (SHIMAZU SEISAKUSHO K.K.) 12.12.1984 | 1 | |
| | --- | | |
| A | US-A-3 600 571 (CHISHOLM et al.) * Zusammenfassung; Spalte 5, Zeile 58 - Spalte 6, Zeile 5 * | 1 | |
| | --- | | |
| A,D | SPECTROCHMICAL ACTA Band 26B, 1971, Seiten 177-189; J.B. WILLIS "Atomization problems in atomic absorption spectroscopy - III" * Seite 178 * | 1 | |
| | --- | | **RECHERCHIERTE SACHGEBIETE (Int. Cl.3)** |
| A,D | SPECTROCHIMICA ACTA Band 25B, 1970, Seiten 487-512; J.B. WILLIS "Atomization problems in atomic absorption spectroscopy - II" * Seite 491 * | 1 | G 01 N 21/00 G 01 J 3/00 |
| | ----- | | |

Der vorliegende Recherchenbericht wurde für alle Patentansprüche erstellt

| Recherchenort | Abschlußdatum der Recherche | Prüfer |
|---|---|---|
| BERLIN | 27-09-1988 | BRISON O.P. |